Europäisches Patentamt

European Patent Office

Office européen des brevets

(11) Publication number: 0 252 633
A2

# EUROPEAN PATENT APPLICATION

(21) Application number: 87305441.5

(22) Date of filing: 19.06.87

(51) Int. Cl.⁴: B60P 1/06

(30) Priority: 20.06.86 GB 8615166

(43) Date of publication of application:
13.01.88 Bulletin 88/02

(84) Designated Contracting States:
DE FR GB IT NL SE

(71) Applicant: Feather, Richard Anthony
15 Der Street
Todmorden Lancashire OL14 5QT(GB)

Applicant: Fairley, Eric
80 Brown Lodge Drive
Littleborough Lancashire(GB)

(72) Inventor: Feather, Richard Anthony
15 Der Street
Todmorden Lancashire OL14 5QT(GB)

(74) Representative: Wharton, Peter Robert
P. R. Wharton & Co. Alliance House 29-31
Kirkgate
Bradford West Yorkshire, BD1 1QB(GB)

(54) Tipping body.

(57) A tipping body 10, for example for a box trailer 12, comprises a chassis 10 and a tippable platform 13. The platform is linked to the chassis by means of a four-bar linkage 14. Tipping is effected by pulling the leading edge 20 of the platform with respect to the chassis 10. The set up is such that as tipping occurs the centre of gravity does not move substantially with respect to the chassis so that the danger of over balancing is reduced or eliminated.

EP 0 252 633 A2

## TIPPING BODY

This invention relates to a tipping body for trailers, trucks and the like.

Box trailers are well known vehicles which comprise a wheeled chassis upon which a body having the form of a large box is secured. Such trailers are generally used to extend the carrying capacity of vehicles by allowing towing of additional loads, for example sand or soil. In order to remove such granular loads from the trailer, it is usual to tip the whole trailer, pivotting about the axle, or to pivot the box with respect to the chassis about the rear edge of the box. In either case tipping is relatively uncontrolled and may require considerable effort. Since with these arrangements the centre of gravity of the load often moves backwards during the tipping motion the entire trailer can be up-ended with the obvious attendant danger.

A further disadvantage with most forms of tipping trailer currently available is that the tipping is actuated by means of a hydraulic ram pushing one end of the trailer platform in order to tip it. Thus the stroke required on the hydraulic ram is large and gets progressively larger with the length of trailer being tipped.

Hydraulic rams of such long stroke are extremely expensive.

The invention seeks to provide a tipping body for trailers and other vehicles which reduce or eliminate the above disadvantages.

According to the present invention there is provided a tipping body which comprises a chassis and a tippable platform, the platform being linked to the chassis by means of a four-bar linkage and tipping being effected by pulling the leading edge of the platform with respect to the chassis.

The four-bar linkage is set up such that as tipping occurs the centre of gravity does not move substantially with respect to the chassis so that the danger of over balancing is reduced or eliminated. Furthermore by operating the device by pulling the leading edge of the platform with respect to the chassis (rather than pushing the trailing edge of the platform with respect to the chassis) a very much smaller stroke is required in order to effect tipping and the components employed may therefore be considerably less expensive than hitherto necessary.

In a preferred form of the invention the tipping body is in the form of a box trailer in which the platform is the base of a box comprising the body of the trailer. However, it will be appreciated that the invention is equally applicable wherever a tipping body is required, for example on an open bodied wagon, pick-up truck or the like. Conveniently, the means of actuation may comprise a winch which in turn may be hand operated or motor driven. For a small box trailer a hand operated winch is sufficient and reduces expense of construction. The leading edge of the trailer body is connected to the winch, mounted at a suitable point on the chassis, by means of a cable, webbing or the like whereby the winch can be operated in order to raise the trailer body and effect tipping.

The invention will be described further, by way of example, with reference to the accompanying drawings, in which:

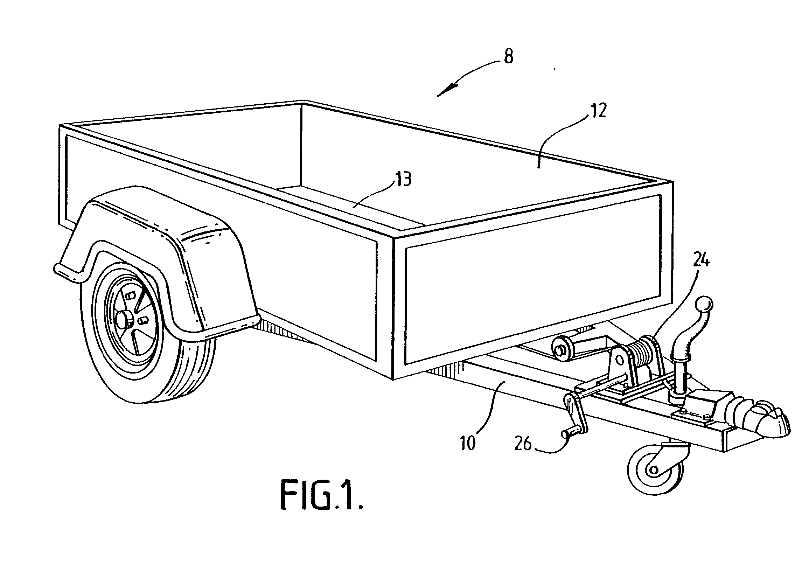

Figure 1 is a perspective view of a box trailer constructed in accordance with the present invention;

Figure 2 is a side view of the trailer of figure 1 in the tipping position;

Figure 3 is a similar view to figure 2 in the normal position; and

Figure 4 is a diagrammatic view on an enlarged scale of the tipping mechanism.

Referring to the drawings, a trailer generally designated 8 comprises a wheeled chassis 10 on which is mounted a body in the form of a box 12 releasably secured by means, for example, a catch or similar means (not shown) to the chassis. The base of the box 12 comprises a platform 13 which is connected to the chassis 10 through a four-bar linkage 14 having short arms 16 and long arms 18. A leading edge of the platform 13 carries a connecting point 20 to which is attached a cable or webbing 22 in turn operated by a winch 24. As illustrated, the box trailer 8 is provided with a conventional towing hitch and bogey wheel behind which the winch 24 is mounted on the chassis 10. The winch 24 is hand operated by means of a crank handle 26 although, especially for larger applications, a motor driven winch may be employed. The webbing 22 is led downwardly from the winch 24 over a roller 28 and thence beneath the chassis 10 to the connecting point 20.

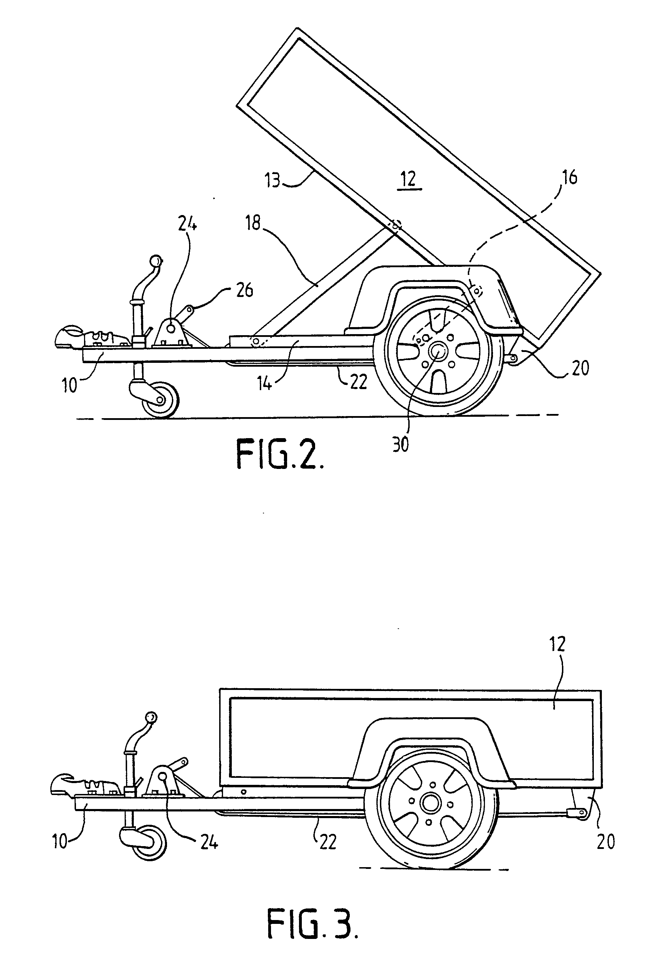

In use, the trailer will normally be in the configuration shown in figure 3 with the trailer body 12 secured to the chassis 10 by means of a catch or the like. When it is desired to tip a load the catch is released and the crank handle 26 on the winch 24 operated thereby tightening the webbing 22 and pulling the leading edge of the platform 13 in towards the chassis 10. The operation of the four-bar linkage 14 causes the trailer body 12 to move to the position shown in figure 2. It will be observed that the leading edge of the platform 13 has moved in towards the axle of the trailer as the latter is progressively tipped. This ensures that the centre of gravity of the load within the trailer box 12 does not move substantially beyond the axle 30 which could lead to the trailer upturning. Furthermore, the degree of movement of the connecting point 20 between figures 3 and 2 is considerably less than the degree of raising of the leading edge of the trailer body and thus should the winch and webbing 22 be replaced by an hydraulic pulling ram, the stroke required would be very much less than in conventional systems allowing a much less expensive ram to be employed.

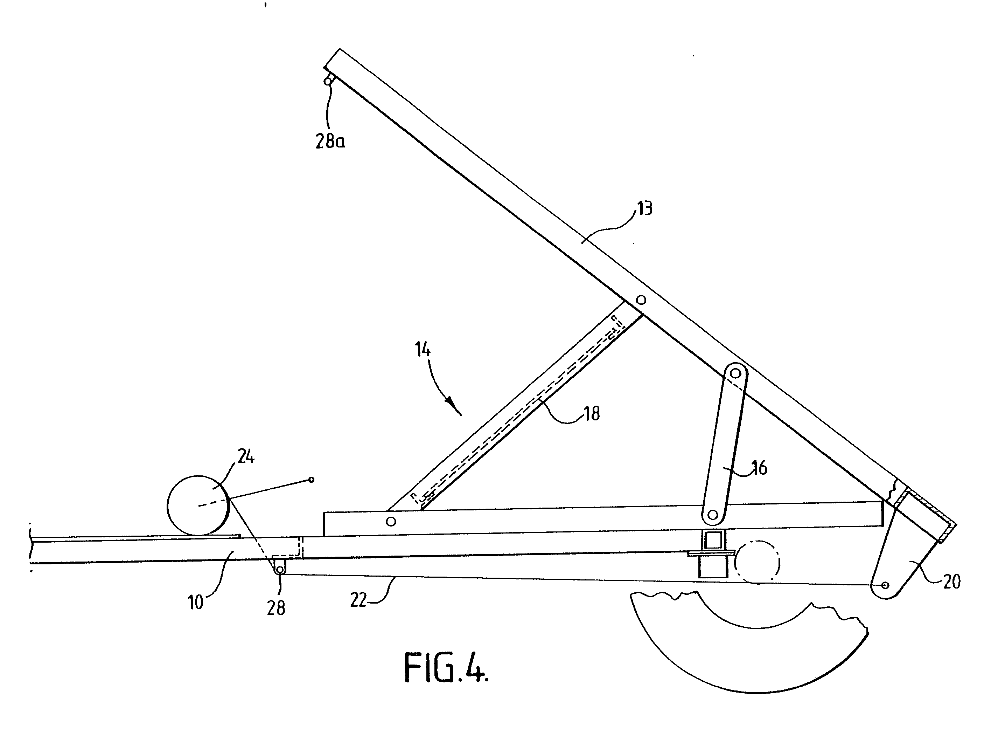

In a preferred form of the invention, illustrated in figure 4, the webbing guide roller 28, instead of being positioned on the chassis 10, is positioned as shown at 28a on the trailing edge of the platform 13. This configuration is especially advantageous since when the winch is initially operated tightening the webbing 22 an upward force is exerted by the webbing 22 on the mounting point 28a and therefore on the platform 13. This augments the pulling force applied to the connecting point 20. Since the mechanical advantage of the linkage 14 is the least in the initial stages of lift, the additional lifting force transferred through the mounting point 28a gives a very useful reduction in the overall force needed to start the tipping action.

The apparatus of the invention ensures that the centre of mass does not move significantly in a longitudinal direction during tipping and that the possibility of instability and sudden overturning is reduced or eliminated. Furthermore the force required to tip the body is significantly less than the load being carried, typically an order of magnitude less. A further advantage of the tipping body of the invention, where a winch is employed, is that when not being employed in the actual tipping operation the winch may be disconnected from the connecting point 20 and used for other purposes, for example in aiding the loading of the trailer.

Overall, the device of the invention provides a versatile and economical tipping body.

## Claims

1. A tipping body for a trailer, truck or the like which comprises a chassis and a tippable platform, the platform being linked to the chassis by means of a four-bar linkage and tipping being effected by pulling the leading edge of the platform with respect to the chassis.

2. A body as claimed in claim 1 in which the four-bar linkage is set us such that as tipping occurs the centre of gravity does not move substantially with respect to the chassis.

3. A body as claimed in either of claims 1 or 2 in the form of a box trailer in which the platform is the base of a box comprising the body of the trailer.

4. A body as claimed in any of claims 1 to 3 in which the pulling of the leading edge is effected by means of a winch mounted at a suitable point on the chassis operating through a cable webbing or the like.

5. A body as claimed in any of claims 1 to 3 in which pulling of the leading edge of the platform is effected by means of an hydraulic pull ram.

6. A body as claimed in claim 4 in which a webbing guide roller is positioned on the underside of the trailing edge of the platform whereby an upward for is exerted on the trailing edge of the platform by the webbing cable or the like on initial operation of the winch.

7. A body as claimed in any of claims 1 to 6 in which the degree of tipping is altered by alternign the ratio of the long and short arms of the four-bar linkage.

FIG.1.

0 252 633

FIG.2.

FIG.3.

FIG.4.

0 252 633